# EUROPEAN PATENT SPECIFICATION

(11) **EP 2 739 569 B1**
(45) Date of publication and mention of the grant of the patent: **02.01.2019**
(21) Application number: 12819846.2
(22) Date of filing: 03.08.2012
(51) Int. Cl.: C01G 55/00, G21G 1/06, C22B 3/00, G21G 1/00

(54) **METHOD FOR SEPARATION OF CHEMICALLY PURE OS FROM METAL MIXTURES**
VERFAHREN ZUR ABSCHEIDUNG VON CHEMISCH REINEM OS AUS METALLMISCHUNGEN
PROCÉDÉ D'EXTRACTION D'OSMIUM CHIMIQUEMENT PUR CONTENU DANS UN MÉLANGE DE MÉTAUX

(30) Priority: 03.08.2011 US 201161514534 P
(43) Date of publication of application: 11.06.2014
(73) Proprietor: The Curators of the University of Missouri, Columbia, MO 65211 (US)
(72) Inventor: ENGELBRECHT, Hendrik, P., Columbia, Missouri 65211 (US); CUTLER, Cathy, S., Columbia, Missouri 65211 (US); MANSON, Leonard, III, Columbia, Missouri 65211 (US); WILDER, Stacy Lynn, Columbia, Missouri 65211 (US)
(74) Representative: Greaves Brewster LLP
(86) International application number: PCT/US2012/049478
(87) International publication number: WO 2013/020030

(56) References cited:
- US-A- 2 049 488
- US-A- 2 049 488
- US-A- 2 813 130
- US-A- 3 536 479
- US-A- 3 536 479
- US-A- 4 683 123
- US-A- 4 683 123
- US-A- 5 215 575
- US-A1- 2009 191 106
- US-B2- 6 475 449
- US-B2- 6 475 449
- US-B2- 7 592 153
- US-B2- 7 858 061
- Hermann Renner ET AL: "Platinum Group Metals and Compounds" In: "Ullmann's Encyclopedia of Industrial Chemistry", 15 June 2001 (2001-06-15), Wiley-VCH Verlag GmbH & Co. KGaA, Weinheim, Germany, XP055174527, ISBN: 978-3-52-730673-2 DOI: 10.1002/14356007.a21_075, * pages 345,350 * * *

## Description

### FIELD OF THE INVENTION

This application relates to methods of separating osmium from a mixture that includes the osmium and at least one additional metal. More specifically, this application relates to a method of oxidizing, selectively removing or distilling, trapping, and precipitating chemically pure osmium from a mixture that includes the osmium and at least one additional metal.

### BACKGROUND OF THE INVENTION

Osmium is an element with numerous useful physical and chemical properties. Osmium is the densest known element and possesses an extremely high hardness comparable to diamond. Wear-resistant osmium alloys are used in the construction of many devices such as fountain pen tips and electrical contacts. Osmium is also used as a contrast agent for staining and fixing lipids prior to visualization using transmission electron microscopy.

Osmium is also a useful material in the production of radioisotopes. Osmium-192 or osmium-189 may also be irradiated on a cyclotron to produce Re-186, a radioisotope with many potential applications to nuclear imaging methods and therapeutic compositions. Osmium-190 may be irradiated in a thermal neutron flux to produce the radioactive isotope Os-191. Os-191 decays to Ir-191^{m}, another radioisotope that is an excellent source of x-rays. Os-191/Ir-191^{m} radioisotope generation systems may be used to provide Ir-191^{m} radioisotope for dynamic radiotracer studies such as angiography.

Due to the toxicity of osmium, medical technologies that make use of osmium are limited in the amount of osmium they may use. In order to minimize the amount of osmium necessary to achieve the desired effect, a higher purity of osmium may be desirable. Existing techniques of producing chemically pure osmium typically involve nitric acid oxidation of a mixture containing the osmium and the fusion of the Os metal with KNO₃/KOH at high temperatures, for example disclosed in US4683123A. Unless the mixture is made up of finely divided particles, the nitric acid oxidation may be a lengthy process. During the purification of osmium radioisotopes, the lengthy process times may expose technicians to extensive dosages of hazardous ionizing radiation.

A need in the art exists for a method of separating an amount of osmium from a mixture of the osmium and at least one other metal in a relatively short time compared to existing methods without need for high temperatures. Such a process may be used to produce chemically pure osmium samples in a shorter time using relatively simple chemical reactions and equipment. The shortened process times further limit the exposure of technicians to potentially hazardous conditions, particularly in the production of chemically pure osmium radioisotopes.

### SUMMARY OF INVENTION

In one aspect, a method of separating an amount of osmium from a mixture that includes the osmium and at least one additional metal is provided. This method includes contacting the mixture with an oxidizing solution to form a volatile OsO₄ vapor, wherein the oxidizing solution comprises an aqueous solution of an oxidizing agent chosen from NaClO, LiClO, KClO, NalO₄, Na₂S₄O₈, XeO₃, NaClO₂, NaClO₃, NaClO₄, NaOH in contact with Cl₂ gas, other alkali salts of ClO⁻, ClO₂⁻, ClO₃⁻ and ClO₄⁻, or combinations thereof, and wherein the mixture is contacted with the oxidizing solution at a temperature ranging from 20°C to 95°C, wherein the mixture is an irradiated Os-190 metal target, the amount of osmium comprises an amount of Os-191, and the at least one additional metal is chosen from Ir-192, Ir-193, Ir-194, Pt-192, Pt-194, and combinations thereof, and wherein the Os-190 metal target is irradiated by a thermal neutron stream; and bubbling the OsO₄ vapor through a KOH trapping solution to form an amount of K₂[OsO₄(OH)₂] dissolved in the KOH trapping solution. This method further includes contacting the dissolved K₂[OsO₄(OH)₂] with a reducing agent to form an Os precipitate and separating the Os precipitate from the KOH trapping solution.

Various aspects of the separation method overcome many of the limitations of existing osmium separation methods. The use of oxidizing solutions such as aqueous solutions of NaClO results in considerably shorter reaction times compared to existing methods. The KOH trapping solution does not require high temperature conditions, unlike existing osmium separation methods. Various aspects of this method of separating osmium may be performed in a relatively short time using simple equipment and readily available materials compared to existing methods. Further, the simple equipment may be housed within a shielded glove box or hot cell, minimizing the exposure of workers to radiation and limiting the possibility of inadvertent environmental release of osmium.

In a preferred embodiment, a method of separating an amount of osmium from a mixture that includes the amount of osmium and at least one additional metal is provided. This method includes contacting the mixture with an aqueous solution of NaClO at a concentration of about 12% available chlorine to form a volatile OsO₄ vapor and bubbling the OsO₄ vapor through a trapping solution that includes an aqueous solution of KOH at a concentration of about 25% w/v to form an amount of dissolved K₂[OsO₄(OH)₂]. This method further includes contacting the dissolved K₂[OsO₄(OH)₂] with an aqueous solution of NaHS at a concentration of about 10% w/v to form an OsS₂ precipitate. In addition, this method includes washing the OsS₂ precipitate by agitating with water, separating the OsS₂ precipitate from the KOH trapping solution by centrifuging, rinsing the OsS₂ precipitate with acetone or other organic solvents to further remove the water from the precipitate, and drying the OsS₂ precipitate.

In an additional aspect, a method of producing an amount of chemically pure Os-191 isotope is described. This method includes irradiating a metal target that includes an amount of isotopically enriched Os-190 metal in a thermal neutron flux to form a mixture that includes Os-191 isotope and at least one additional metal chosen from Ir-192, Ir-193, Ir-194, Pt-192, Pt-194, and combinations thereof. The method also includes contacting the mixture with an aqueous solution of NaClO at a concentration of about 12% available chlorine to form a volatile OsO₄ vapor comprising Os-191, as well as bubbling the OsO₄ vapor through a trapping solution that includes an aqueous solution of KOH at a concentration of about 25% w/v to form an amount of dissolved K₂[OsO₄(OH)₂] that contains the Os-191. The method also includes contacting the dissolved K₂[OsO₄(OH)₂] with an aqueous solution of NaHS at a concentration of about 10% w/v to form an OsS₂ precipitate containing the Os-191. Further included in the method is washing the resulting OsS₂ precipitate by agitating with water, separating the washed OsS₂ precipitate from the KOH trapping solution by centrifuging, rinsing the separated OsS₂ precipitate with acetone, and drying the rinsed OsS₂ precipitate.

In another additional aspect, a method of removing an osmium impurity from a mixture comprising the osmium impurity and at least one additional metal is described. This method includes contacting the mixture with an oxidizing solution to form a volatile OsO₄ vapor and distilling the OsO₄ vapor out of the oxidizing solution to form a second solution that includes the at least one additional metal dissolved in the oxidizing solution. The method further includes separating the at least one additional metal from the second solution.

Other aspects and iterations of the embodiments are described in detail below.

### DESCRIPTION OF FIGURES

The following figures illustrate various aspects of the embodiments.
**FIG. 1** is a flow chart illustrating a method of separating chemically pure osmium from a mixture.
**FIG. 2** is schematic illustration of an impinger.
**FIG. 3** is a schematic illustration of a capture vessel.
**FIG. 4** is a schematic illustration of a capture vessel with a dual-tip pipette.
**FIG. 5** is a schematic illustration of a system for separating chemically pure osmium from a mixture.
**FIG. 6** is a flow chart illustrating a method of obtaining an osmium-free material from a mixture that includes an osmium impurity.

Corresponding reference characters and labels indicate corresponding elements among the views of the drawings. The headings used in the figures should not be interpreted to limit the scope of the claims.

### DETAILED DESCRIPTION

### I. Overview of Method

Various aspects provide methods of separating osmium from a mixture of metals including the osmium as well as at least one other metal. These methods may be used to produce chemically pure osmium or to remove osmium impurities from a mixture that includes the osmium and at least one other metal. In an aspect, the chemically pure osmium may be a radioisotope. In another aspect, the chemically pure osmium may be used as an isotopically-enriched osmium target to produce radioisotopes by irradiation of the osmium target in an irradiation source including, but not limited to, a thermal neutron flux, a cyclotron, or a linear accelerator.

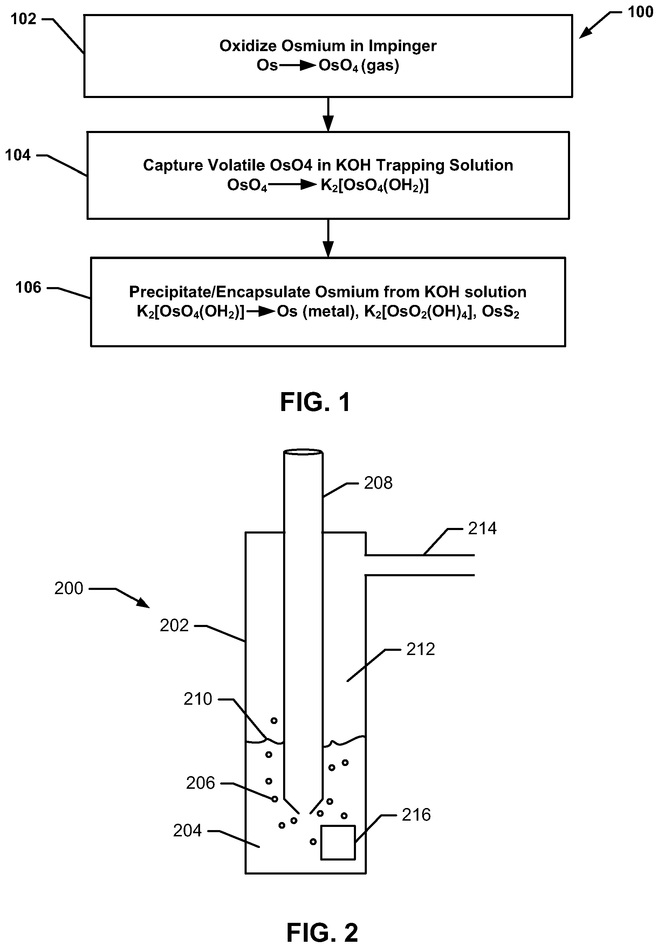

A flowchart describing an aspect of a method **100** is provided in **FIG. 1**. In this aspect, the osmium within the mixture is oxidized in an oxidizing solution within an impinger to produce gaseous OsO₄ vapor at step **102**. The OsO₄ vapor is bubbled through a KOH trapping solution at step **104**, where the OsO₄ reacts with the KOH in the trapping solution to form dissolved K₂[OsO₄(OH)₂]. The K₂[OsO₄(OH)₂] is then contacted with a reducing agent at step **106** to form an osmium-containing precipitate. Non-limiting examples of osmium-containing precipitate include osmium metal, OsO₂, OsS₂, K₂[OsO₂(OH)₄], and any combination thereof.

The mixture may include a variety of radioactive and nonradioactive isotopes. Non-limiting examples of metals that may be included in the mixture include lanthanide metals, transition metals, alkali metals, and metals from the platinum family. Non-limiting examples of specific metal elements that may be included with osmium in a mixture include Rh, Pd, Ir, Pt, Sc, Ti, V, Cr, Mn, Fe, Co, Ni, Cu, Y, Zr, Nb, Mo, Tc, Ag, Cd, La, Hf, Ta, W, Re, Au, Hg, Ac, Rf, Db, Sg, Bh, Hs, Mt, Ds, Rg, La, Ce, Pr, Nd, Pm, Sm, Eu, Gd, Tb, Dy, Ho, Er, Tm, Yb, Lu, Ac, Th, Pa, U, Np, Pu, Am, Cm, Bk, Cf, Es, Fm, Md, No, Lr, and any combination thereof. The mixture results from the irradiation of an enriched Os-190 target by a thermal neutron stream and may include Os-191, Os-191^{m}, Ir-191^{m}, Ir-191, Ir-192^{m}, Ir-192, Ir-193, Ir-194, Pt-192, Pt-194, and combinations thereof, as defined in the claims. In another aspect, it is disclosed that enriched Os-190 may be irradiated in a cyclotron to produce a mixture that may include Pt-188, Pt-189, Pt-191, Pt-193m, Pt-195m, and combinations thereof. In an additional aspect, it is disclosed that enriched Os-190 may be irradiated in a cyclotron to produce a mixture that may include Re-186, an isotope with at least several potential applications including but not limited to nuclear imaging methods and therapeutic compositions.

Other aspects of methods of separating osmium from a mixture of metals are described in detail below.

### II. Oxidation of Osmium

In various aspects, the osmium within a mixture may be separated from a mixture that includes the osmium and at least one other metal by contacting the mixture with an oxidizing agent to form a volatile OsO₄ vapor.

The oxidizing agents include NaClO, LiClO, KClO, NalO₄, Na₂S₄O₈, XeO₃, NaClO₂, NaClO₃, NaClO₄, NaOH in contact with Cl₂ gas, other alkali salts of CIO, ClO₂, ClO₃ and ClO₄, and combinations thereof. The concentration of the oxidizing agent in an aqueous solution may range from about 5% to about 30% available chlorine. The concentration of oxidizing agent may be selected based on any one or more of at least several factors including, but not limited to: the composition of the mixture, the
availability of the oxidizing agent, the safety and ease of use of the oxidizing agent, the temperature and other reaction conditions of the mixture and the oxidizing agent, and the solubility of the oxidizing agent.

The temperature at which the mixture is contacted with the oxidizing agent ranges from 20° C to 95° C. The temperature may be selected to result in a relatively rapid but controlled reaction rate without causing the aqueous solution containing the oxidizing agent to boil. In an aspect, the oxidizing agent is NaClO in aqueous solution at a concentration of about 12% available chlorine, and the NaClO solution is contacted with the mixture at a temperature of about 40° C.

In another aspect, the oxidizing solution may be maintained at a temperature of about 40° C until the mixture containing the osmium and other metals is completely dissolved, and the oxidizing solution may be maintained at a temperature of about 90° C for the remainder of the reaction. As the mixture containing the osmium and other metals dissolves within the oxidizing solution, the solution may take on a yellowish colored appearance as the osmium is oxidized within the oxidizing solution. As the dissolved OsO₄ is distilled out of the oxidizing solution, the oxidizing solution takes on a transparent white appearance. In an aspect, a colored oxidizing solution containing the dissolved mixture of metals may be maintained at a temperature of about 90° C until the oxidizing solution again takes on a transparent appearance, indicating that essentially all osmium in the solution has been oxidized and distilled away.

In various aspects, the mixture is contacted with the oxidizing agent in an impinger, shown schematically in **FIG. 2**. In this aspect, the impinger **200** includes a closed vessel **202** containing the oxidizing solution **204**. In use, the mixture **216** and oxidizing solution **204** are placed into the impinger **200**. A gas is introduced into the impinger **200** via an impinger inlet **208**, which bubbles through the oxidizing solution **204**, causing the mixing of the contents of the impinger **200**.

As the oxidizing solution **204** contacts the mixture **216**, the osmium within the mixture may be converted into OsO₄ vapor. This OsO₄ vapor may form into bubbles **206** that may float to the surface **210** of the oxidizing solution **204**, where the OsO₄ vapor is released into the headspace **212** of the impinger 200. Driven by the building pressure of the gases introduced into the impinger **200**, the gases within the headspace **212**, which may include OsO₄ vapor, exit the impinger **200** via the impinger exit **214**.

The gas that is introduced into the impinger **200** may be any gas that does not interfere with the reaction between the mixture and the oxidizing solution including, but not limited to: air, oxygen, nitrogen, noble gases, and combinations thereof. In an aspect, the gas is selected to be a non-toxic gas capable of being vented to the environment after the OsO₄ has been extracted as described herein below. Non-limiting examples of gases suitable for introduction into the impinger **200** include nitrogen, argon, helium, oxygen, and combinations thereof. In another aspect, the gas introduced into the impinger **200** is nitrogen.

The gas may be introduced at any suitable rate that results in the vigorous mixing of the mixture and the oxidizing solution, so long as the rate does force the venting of any oxidizing solution through the impinger exit **214**. The source of the gas may be the atmosphere outside of the impinger **200**, or the gas source may be a pressurized tank or any other existing gas source. In other aspects, the rate of introduction of the gas into the impinger **200** may be limited by the design and performance capabilities of the impinger **200**, as well as the design and performance capability of other components downstream of the impinger **200**, such as the trapping vessel, described in detail herein below.

### III. Capture of OsO₄ in Trapping Solution

In various embodiments, the OsO₄ vapor may be bubbled through a KOH trapping solution to form an amount of K₂[OsO₄(OH)₂] dissolved within the trapping solution. In an aspect, the KOH trapping solution comprises an aqueous solution of KOH at a concentration ranging from about 10% to about 50% w/v. The concentration of the KOH may be selected based on any one or more of at least several factors including, but not limited to: the rate and concentration at which the OsO₄ vapor is bubbled through the KOH trapping solution, the reaction conditions such as temperature of the KOH trapping solution, and the solubility of the KOH in the aqueous solvent. In an aspect, the KOH trapping solution is an aqueous solution of KOH at a concentration of about 25% w/v at a temperature of less than about 5° C.

In another embodiment, a trap vessel containing the KOH trapping solution is situated within an ice bath. Without being bound to any particular theory, the reduction of the OsO₄ vapor within the KOH trapping solution is an exothermic reaction. Cooling the KOH trapping solution to a lower temperature using an ice bath maintains the KOH trapping solution at a higher solubility for the OsO₄ vapor.

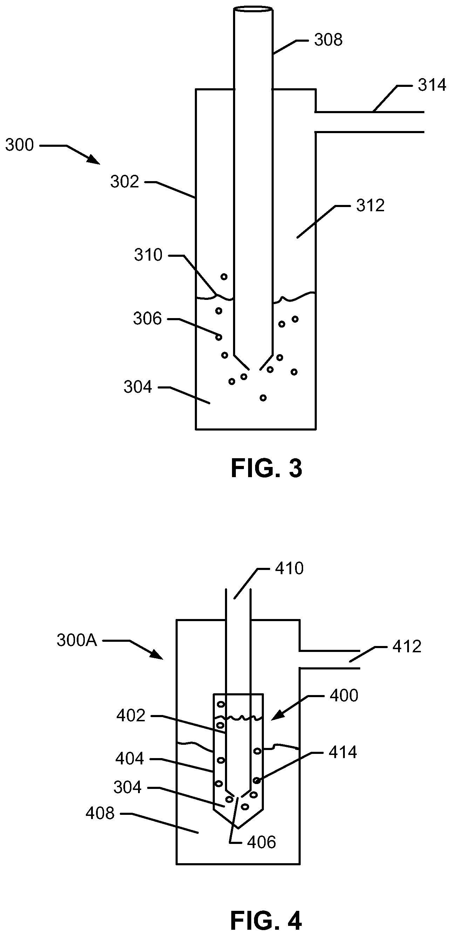

**FIG. 3** is a schematic illustration of a trap vessel **300** in one aspect. In this aspect, the trap vessel **300** may be any closed vessel **302** containing an amount of KOH trapping solution **304**. The gas exiting the impinger **200**, which may contain OsO₄ vapor, is directed into the trap inlet **308**, which bubbles the gas through the KOH trapping solution **304**. The gas bubbles impart mixing of the gas and the KOH trapping solution **304**, as well as promote the intimate contact of the OsO₄ vapor with the KOH within the trapping solution **304**. The bubbles **306** exit the surface **310** of the trapping solution **304** into the trap headspace **312**. Gas within the trap headspace **312** is forced from the trap vessel **300** by the continuous introduction of additional gases through the trap inlet **308**. The headspace gas, which may contain a lower concentration of OsO₄ vapor than the gas entering the trap inlet **308**, may exit the trap vessel **300** through the trap exit **314**.

The concentration of OsO₄ vapor exiting the trap vessel **300** through the trap exit **314** may be less than about 20% of the concentration of the OsO₄ vapor entering the vessel **300** through the trap inlet **308**. The degree of reduction of OsO₄ vapor concentration may be governed by the effectiveness the reaction between the OsO₄ and the KOH in the trapping solution **312**. The effectiveness of the reaction may depend on any one or more of at least several factors including, but not limited, to: the concentration of KOH in the trapping solution **304**, the reaction conditions such as temperature and pressure within the trap vessel **300**, the rate of gas introduction into the trap vessel **300**, and the design of the trap vessel **300**. In other aspects, the concentration of OsO₄ vapor exiting the trap vessel **300** through the trap exit **314** may be less than about 10%, less than about 5%, less than about 1%, or less than about 0.1% of the concentration of the OsO₄ vapor entering the vessel **300** through the trap inlet **308**.

In another aspect, the trap vessel **300** may include a two-in-one pipette **400**, shown schematically in **FIG. 4**. The two-in-one pipette **400** includes an inner pipette **402** situated within an outer pipette **404**. The gas entering the trap vessel **300A** via the pipette inlet **410** is released through the open tip **406** of the inner pipette **402**. The released gas from the open tip **406** bubbles through a small amount of KOH trapping solution **304** contained within the outer pipette **404**.

Without being tied to any particular theory, the introduction of the gas through the two-in-one pipette **400** imparts more intimate and sustained contact between the bubbles **414** and the trapping solution **304**. The bubbles **414** may be distorted into larger surface areas, shaped by capillary forces imparted by the outer surface of the inner pipette **402** and the inner surface of the outer pipette **404**. Further, these capillary forces may impede the free movement of the bubbles to the surface of the trapping solution **304**, resulting in a sustained time of contact between the gas bubbles **414** and the trapping solution **304**. This combination of factors may result in more efficient and extensive conversion of the OsO₄ vapor into K₂[OsO₄(OH)₂] within the trapping solution **304**. The two-in-one pipette **400** may be immersed in a liquid **408** to facilitate heat transfer from the pipette **400** to a heat sink such as an ice bath (not shown). The bubbles **414** may be released into the headspace **416** of the outer pipette **404** and may exit the two-in-one pipette **400** via a vapor outlet **412**.

The rate at which gas from the impinger **200** is introduced into the trapping vessel **300** may depend on any one or more of at least several factors including, but not limited to: the rate at which gases exit the impinger **200**, as well as the sizing and design of the trap vessel **300**. The rate at which gases exit the impinger **200** may be governed by the rate at which gas is introduced into the impinger **200** as well as the rate of production of OsO₄ vapor within the oxidizing solution **204**. The trap vessel **300** may be designed to have a volume that is larger relative to the impinger **200** in order to impart a lower flow velocity through the trap vessel **300**. Alternatively, the gases exiting the impinger **200** may be directed into two or more trap vessels **300** attached in parallel, resulting in a larger overall trap vessel volume relative to the impinger **200**.

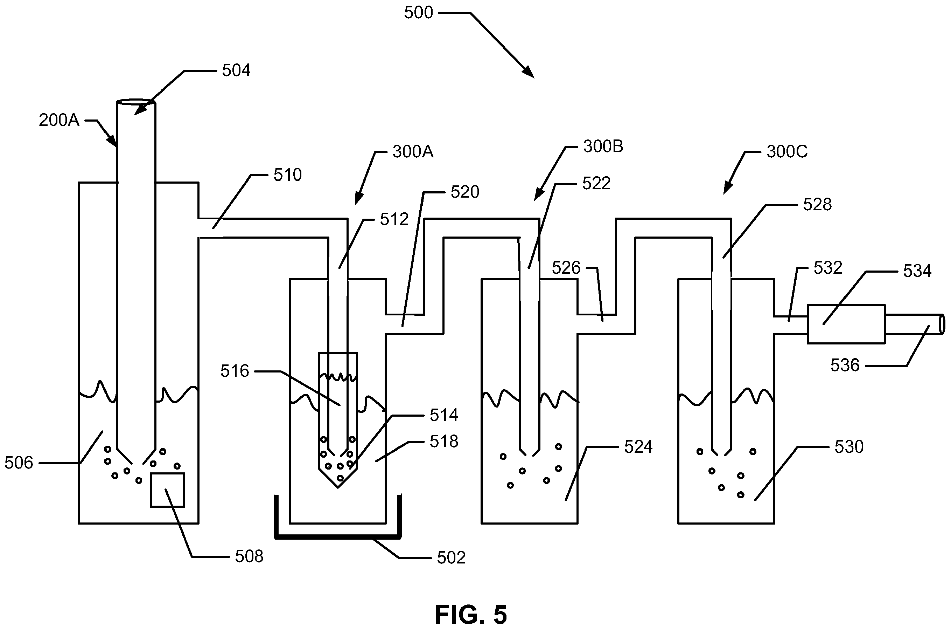

In another aspect, in order to trap a higher proportion of the OsO₄ vapor released by the impinger **200**, two or more trap vessels may be connected in series to the impinger exit **214.** **FIG. 5** is a schematic illustration showing a series of trap vessels **300A**, **300B**, and **300C** connected in series to the impinger **200A**. If two or more trap vessels **300** are connected to the impinger exit **510** in parallel as described herein above, additional trap vessels may be connected in series to each of the trap vessels connected directly to the impinger. In yet another aspect, a final trapping filter **534**, including but not limited to an adsorbent filter such as an activated charcoal filter, may be connected to the trap exit **532** of each final trap vessel **300C** in each series of trap vessels.

### IV. Precipitation/Encapsulation of Osmium from Trapping Solution

In various embodiments, the osmium trapped within the dissolved K₂[OsO₄(OH)₂] in the KOH trapping solution may be precipitated and/or encapsulated into a usable form by contacting the dissolved K₂[OsO₄(OH)₂] with a reducing agent to form an Os precipitate. The particular Os precipitate formed depends upon the species of reducing agent contacted with the dissolved K₂[OsO₄(OH)₂]. Non-limiting examples of Os precipitates include Os metal, OsS₂, OsO₂, and K₂[OsO₂(OH)₄]. Non-limiting examples of suitable species of reducing agents include absolute ethanol, Zn shavings, Al shavings, Mg shavings, NaBH₄ and other alkali salts of BH₄, NaHS, H₂S gas, Na₂S₂O₃, UV light, phosphine ligands, hydrazine, hydroquinone, hydrophosphorous acid, formaldehyde, hydroxylamine, citrate, ascorbic acid, and hydrogen gas.

In one aspect, the Os is recovered from the KOH trapping solution by reducing the dissolved K₂[OsO₄(OH)₂] to K₂[OsO₂(OH)₄] crystals by adding an amount of absolute ethanol to the KOH trapping solution. In this embodiment, the concentration of the absolute ethanol added may range from about 1% to about 20% v/v. In another aspect, ethanol is added at a concentration of about 5% v/v. The K₂[OsO₂(OH)₄] crystals may then be harvested for encapsulation.

In another aspect, Zn, Mg, or Al metal shavings may be added to the KOH trapping solution, and concentrated HCI may be added to the solution to lower the pH of the solution, resulting in the formation of Os metal. After removal of the shavings, the precipitate may be centrifuged and washed with water to isolate the Os metal.

In an additional aspect, Zn and Al shavings may be added to the basic KOH trapping solution to form a precipitate that may include Os metal, OsO₂, and combinations thereof. In another additional aspect, NaBH₄ may be added to the KOH trapping solution to form an Os metal precipitate or other reduced species of Os such as OSO₂. The precipitate may be centrifuged and washed with water to isolate the Os metal.

In yet another aspect, NaHS may be added to the KOH trapping solution in order to form an OsS₂ precipitate. The OsS₂ precipitate may also be formed by bubbling H₂S gas through the KOH trapping solution. In addition, Na₂S₂O₃ may be added to either the basic or acidified KOH trapping solution to form an OsS₂ precipitate. The OsS₂ precipitate may be centrifuged and washed with water to isolate the OsS₂ precipitate.

In still yet another aspect, the osmium may be encapsulated by drawing an amount of the KOH trapping solution containing the K₂[OsO₄(OH)₂] into a thin vial, followed by dipping the thin vial into an aqueous solution containing NaHS to form an encapsulated OsS₂ precipitate within the thin vial.

### V. System for Separating Osmium from Mixtures of Other Metals

Various embodiments provide a system for the separation of osmium from a mixture including the osmium and at least one other metal. **FIG. 5** is a schematic representation of an osmium separation system **500**. The system **500** includes an impinger **200A** and a series of trapping vessels **300A-300C** that may include a first trapping vessel **300A** in an ice bath **502**, a second trapping vessel **300B**, a third trapping vessel **300C**, and an activated charcoal filter **534**. The impinger exit **510** may be connected directly to the first trap inlet **512**, the first trap exit **520** may be connected directly to the second trap inlet **522**, the second trap exit **526** may be connected directly to the third trap inlet **528**, and the third trap exit may be connected directly to the activated charcoal filter **534**. The filter exit **536** may vent directly to the atmosphere. The elements of the system **500** form a continuous hydraulic path from the impinger inlet **504** to the filter exit **536**, and the gases are impelled from the impinger **200A** to the first trap vessel **300A** due to the pressurization of the impinger **200A** caused by the continuous introduction of gas into the impinger inlet **504**.

In use, a mixture **508** that includes an amount of osmium and at least one other metal may be placed into the impinger **200A** along with an amount of oxidizing solution **506**. The oxidizing solution **506** may be maintained at about 40° C, and a moderate flow of nitrogen may be introduced into the impinger inlet **504**, causing the agitation of the oxidizing solution **506** as well as the fluids within the downstream trap vessels **300A-300C**. As the mixture **508** dissolves into the oxidizing solution **506**, the oxidizing solution **506** may take on a colored appearance. Once the mixture has completely dissolved within the oxidizing solution **506**, the temperature of the oxidizing solution **506** solution may be maintained at about 90° C until all of the osmium in the oxidizing solution **506** has been oxidized into OsO₄ vapor. In an aspect, the color of the oxidizing solution **506** may change from colored to clear to indicate the oxidation of all dissolved osmium in the oxidizing solution **506**.

The OsO₄ vapor formed in the impinger **200A** may be carried along with the introduced nitrogen into the first trap vessel **300A.** In an embodiment, the first trap vessel **300A** includes a two-in-one pipette **516** containing an amount of KOH trapping solution **514**. An amount of OsO₄ vapor bubbling through the KOH trapping solution **514** may contact the dissolved KOH, forming dissolved K₂[OsO₄(OH)₂]. The introduced nitrogen, along with any untrapped OsO₄ vapor may pass into the second trap vessel **300B**, where an amount of OsO₄ may be captured within the second KOH trapping solution **524**. Similarly, the introduced nitrogen, along with any further untrapped OsO₄ vapor, may pass into the third trap vessel **300C**, where an amount of OsO₄ may be captured within the third KOH trapping solution **530**. Any residual OsO₄ vapor leaving the third trap vessel **300C** may be captured within the activated charcoal filter **534**, and essentially osmium-free nitrogen may exit the filter exit **536** to the atmosphere.

Once essentially all of the dissolved osmium within the oxidizing solution **506** has been oxidized into OsO₄ vapor and bubbled through the trap vessels **300A** - **300C**, the flow of nitrogen gas may be stopped and the dissolved K₂[OsO₄(OH)₂] within the KOH trapping solution **514** may be precipitated into a useable form using any of the methods described herein previously. In an aspect, only dissolved K₂[OsO₄(OH)₂] within the KOH trapping solution **514** from the first trap vessel **300A** is precipitated. In another aspect, the trapping solutions **514**, **524**, and **530** may be combined and the dissolved K₂[OsO₄(OH)₂] within the combined KOH trapping solutions may be precipitated.

In an aspect, the dissolved K₂[OsO₄(OH)₂] within the combined KOH trapping solutions may be transferred into a centrifuge tube and combined with an amount of NaHS to form a black OsS₂ precipitate. The OsS₂ precipitate may be further treated after the addition of the NaHS, or the centrifuge tube may be left as long as about 6 hours to about 24 hours to ensure that the K₂[OsO₄(OH)₂] has completely reacted with the NaHS. The OsS₂ precipitate in the centrifuge may be agitated with water, centrifuged, and the water supernate may be discarded. This washing process may be repeated two or more times to ensure that any remaining impurities are rinsed from the OsS₂ precipitate.

The water-rinsed OsS₂ precipitate may be additionally rinsed with a solvent such as acetone and dried at room temperature for about 1 hour.

### Other Applications of Method

The osmium separation methods of various aspects may be applied in a variety of different contexts. As described herein above, one aspect of the method may be used to separate osmium isotopes or radioisotopes from a mixture including the osmium and at least one other metal. The resulting chemically pure osmium may be an enriched osmium target used for the production of radioisotopes, or the chemically pure osmium may be Os-191 as in the process according to the present invention, or other Os radioisotopes used in a variety of applications including, but not limited to: a radiotracer composition, a radiotracer source, or as an ingredient in a therapeutic composition.

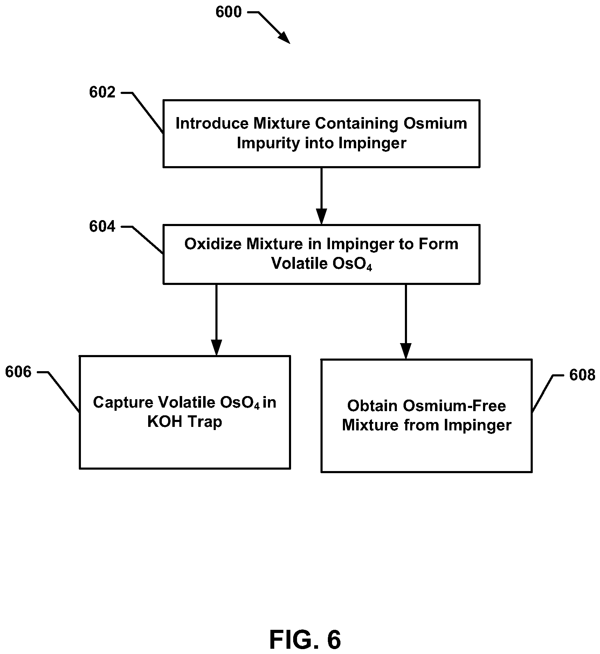

In another aspect, the osmium separation method may be used to separate an osmium impurity from a mixture including the osmium impurity and at least one other metal. A flowchart of this method **600** is illustrated in **FIG. 6**. In this aspect, the material source that includes the osmium impurity is introduced into the impinger at step **602**. The mixture is dissolved and oxidized in the impinger at step **604**, as described herein previously. The volatile OsO₄ vapor resulting from the oxidation of the osmium impurities may be trapped within the KOH trapping solution at step **606**. This trapped osmium may be treated to reclaim the osmium or discarded, depending on the intended use of the osmium impurities.

In this aspect, the mixture that includes at least one other metal remains dissolved in the oxidizing solution in the impinger. In an aspect, the at least one other metal may be precipitated out of the oxidizing solution by contacting the oxidizing solution with a reducing agent at step **608** to produce an osmium-free mixture. The selection of reducing agent may depend on one or more of at least several factors including, but not limited to, the particular species of dissolved metal within the oxidizing solution.

In another aspect, if the oxidizing solution contains an amount of Re-186, the Re-186 may be separated from the oxidizing solution by contacting the oxidizing solution with an alumina chromatographic column, and eluting the Re-186 using a saline solution. In another aspect, a dissolved metal may be isolated from the oxidizing solution using electroplating methods.

Having described the invention in detail, it will be apparent that modifications and variations are possible.

## Claims

1. A method of separating an amount of osmium from a mixture comprising the amount of osmium and at least one additional metal, the method comprising:
a. contacting the mixture with an oxidizing solution to form a volatile OsO₄ vapor, wherein the oxidizing solution comprises an aqueous solution of an oxidizing agent chosen from NaClO, LiClO, KClO, NalO₄, Na₂S₄O₈, XeO₃, NaClO₂, NaClO₃, NaClO₄, NaOH in contact with Cl₂ gas, other alkali salts of ClO⁻, ClO₂⁻, ClO₃⁻ and ClO₄⁻, or combinations thereof, and wherein the mixture is contacted with the oxidizing solution at a temperature ranging from 20°C to 95°C, wherein the mixture is an irradiated Os-190 metal target, the amount of osmium comprises an amount of Os-191, and the at least one additional metal is chosen from Ir-192, Ir-193, Ir-194, Pt-192, Pt-194, and combinations thereof, and wherein the Os-190 metal target is irradiated by a thermal neutron stream;
b. bubbling the OsO₄ vapor through a KOH trapping solution to form an amount of K₂[OsO₄(OH)₂] dissolved in the KOH trapping solution;
c. contacting the dissolved K₂[OsO₄(OH)₂] with a reducing agent to form an Os precipitate; and
d. separating the Os precipitate from the KOH trapping solution.

2. The method of claim 1, wherein the oxidizing solution is an aqueous solution of NaClO at a concentration of 12% available chlorine and the NaClO solution is contacted with the mixture at a temperature of 40°C.

3. The method of claim 2, wherein the mixture is contacted with the oxidizing solution in an impinger device.

4. The method of claim 1, wherein the KOH trapping solution comprises an aqueous solution of KOH at a concentration of 25% w/v.

5. The method of claim 1, wherein the reducing agent is chosen from absolute ethanol, Zn shavings, Al shavings, Mg shavings, NaBH₄, NaHS, H₂S gas, Na₂S₂O₃, far UV light, phosphine ligands, hydrazine, hydroquinone, hypophosphorous acid, formaldehyde, hydroxylamine, and citrate.

6. The method of claim 5, wherein:
the reducing agent is absolute ethanol at a concentration of 5% v/v and the Os precipitate is K₂[OsO₂(OH)₄];
the reducing agent is a mixture of Zn shavings and Al shavings, and the Os precipitate is Os metal;
the reducing agent is chosen from Zn shavings, Mg shavings, and Al shavings, the reducing agent is contacted with the dissolved K₂[OsO₄(OH)₂] in combination with HCI, and the Os precipitate is Os metal;
the reducing agent is NaBH₄ and the Os precipitate is Os metal; or
the reducing agent is chosen from NaHS, H₂S gas, Na₂S₂O₃ and the Os precipitate is OsS₂.

7. The method of claim 1, wherein the at least one other metal is precipitated out of the oxidizing solution by contacting the oxidizing solution with a reducing agent to form an osmium-free mixture comprising the at least one additional metal.

8. The method of claim 1, wherein:
the oxidizing solution comprises an aqueous solution of NaClO at a concentration of 12% available chlorine;
the KOH trapping solution comprises an aqueous solution of KOH at a concentration of 25% w/v;
the reducing agent is an aqueous solution of NaHS at a concentration of 10% w/v;
the OsS₂ precipitate is washed prior to step d) by agitating with water;
the OsS₂ precipitate is separated from the KOH trapping solution by centrifuging;
the OsS₂ precipitate is rinsed with acetone; and dried.

9. The method of claim 2 or 8, wherein the mixture is contacted with the oxidizing solution at a temperature of 40° C until completely dissolved, and the dissolved mixture is contacted with the oxidizing solution at a temperature of 90° C.

10. The method of claim 9, wherein the dissolved mixture is contacted with the oxidizing solution until the oxidizing solution is colorless.

11. The method of claim 4 or 8, wherein the KOH trapping solution is maintained at a temperature of less than 5° C while the dissolved K₂[OsO₄(OH)₂] is forming.

## Patentansprüche

1. Verfahren zur Abtrennung einer Menge an Osmium aus einer Mischung, umfassend die Menge an Osmium und mindestens ein zusätzliches Metall, wobei das Verfahren umfasst:
a. Inkontaktbringen der Mischung mit einer oxidierenden Lösung, um einen flüchtigen OsO₄-Dampf zu bilden, wobei die oxidierende Lösung eine wässrige Lösung eines Oxidationsmittels umfasst, das ausgewählt ist aus NaClO, LiClO, KClO, NalO₄, Na₂S₄O₈, XeO₃, NaClO₂, NaClO₃, NaClO₄, NaOH in Kontakt mit Cl₂-Gas, weiteren Alkalisalzen von ClO⁻, ClO₂⁻, ClO₃⁻ und ClO₄⁻ oder Kombinationen davon, und wobei die Mischung bei einer Temperatur im Bereich von 20 °C bis 95 °C mit der oxidierenden Lösung in Kontakt gebracht wird, wobei die Mischung ein bestrahltes Os-190-Metalltarget ist, die Menge an Osmium eine Menge an Os-191 umfasst und das mindestens eine weitere Metall ausgewählt ist aus Ir-192, Ir-193, Ir-194, Pt-192, Pt-194 und Kombinationen davon, und worin das Os-190-Metalltarget durch einen thermischen Neutronenstrom bestrahlt wird,
b. Leiten des OsO₄-Dampfes durch eine KOH-Fängerlösung, um eine in der KOH-Fängerlösung gelöste Menge an K₂[OsO₄(OH)₂] zu bilden,
c. Kontaktieren des gelösten K₂[OsO₄(OH)₂] mit einem Reduktionsmittel, um einen Os-Niederschlag zu bilden, und
d. Abtrennen des Os-Niederschlags von der KOH-Fängerlösung.

2. Verfahren nach Anspruch 1, wobei die oxidierende Lösung eine wässrige Lösung von NaClO mit einer Konzentration von 12 % verfügbarem Chlor ist und die NaClO-Lösung mit der Mischung bei einer Temperatur von etwa 40 °C in Kontakt gebracht wird.

3. Verfahren nach Anspruch 2, wobei die Mischung mit der oxidierenden Lösung in einer Impinger-Vorrichtung in Kontakt gebracht wird.

4. Verfahren nach Anspruch 1, wobei die KOH-Fängerlösung eine wässrige Lösung von KOH mit einer Konzentration von 25 % w/v umfasst.

5. Verfahren nach Anspruch 1, wobei das Reduktionsmittel ausgewählt ist aus absolutem Ethanol, Zn-Spänen, Al-Spänen, Mg-Späne, NaBH₄, NaHS, H₂S-Gas, Na₂S₂O₃, fernem UV-Licht, Phosphin-Liganden, Hydrazin, Hydrochinon, unterphosphoriger Säure, Formaldehyd, Hydroxylamin und Citrat.

6. Verfahren nach Anspruch 5, wobei das Reduktionsmittel absolutes Ethanol in einer Konzentration von 5 % v/v und der Os-Niederschlag K₂[OsO₂(OH)₄] ist,
das Reduktionsmittel ein Gemisch aus Zn-Spänen und Al-Spänen ist und der Os-Niederschlag Os-Metall ist,
das Reduktionsmittel ausgewählt ist aus Zn-Spänen, Mg-Spänen und Al-Spänen, das Reduktionsmittel mit dem gelösten K₂[OsO₄(OH)₂] in Kombination mit HCl in Kontakt gebracht wird und der Os-Niederschlag Os-Metall ist,
das Reduktionsmittel NaBH₄ und der Os-Niederschlag Os-Metall ist oder
das Reduktionsmittel ausgewählt ist aus NaHS, H₂S-Gas, Na₂S₂O₃ und der Os-Niederschlag OsS₂ ist.

7. Verfahren nach Anspruch 1, wobei das wenigstens eine andere Metall aus der oxidierenden Lösung durch Kontaktieren der oxidierenden Lösung mit einem Reduktionsmittel ausgefällt wird, um eine Osmium-freie Mischung zu erhalten, die das mindestens eine weitere Metall umfasst.

8. Verfahren nach Anspruch 1, worin:
die oxidierende Lösung eine wässrige Lösung von NaClO mit einer Konzentration von 12 % verfügbarem Chlor umfasst,
die KOH-Fängerlösung eine wässrige Lösung von KOH mit einer Konzentration von 25 % w/v umfasst,
das Reduktionsmittel eine wässrige Lösung von NaHS mit einer Konzentration von 10 % w/v ist,
der OsS₂-Niederschlag vor Schritt d) durch Rühren mit Wasser gewaschen wird,
der OsS₂-Niederschlag von der KOH-Fängerlösung durch Zentrifugieren getrennt wird,
der OsS₂-Niederschlag mit Aceton gespült und getrocknet wird.

9. Verfahren nach Anspruch 2 oder 8, wobei die Mischung mit der oxidierenden Lösung bei einer Temperatur von 40 °C bis zur vollständigen Auflösung in Kontakt gebracht wird und die gelöste Mischung bei einer Temperatur von 90 °C mit der oxidierenden Lösung in Kontakt gebracht wird.

10. Verfahren nach Anspruch 9, wobei die gelöste Mischung mit der oxidierenden Lösung in Kontakt gebracht wird, bis die oxidierende Lösung farblos ist.

11. Verfahren nach Anspruch 4 oder 8, wobei sich die KOH-Fängerlösung bei einer Temperatur von weniger als 5 °C gehalten wird, während sich das gelöste K₂[OsO₄(OH)₂] bildet.

## Revendications

1. Procédé de séparation d'une quantité d'osmium contenue dans un mélange comprenant la quantité d'osmium et au moins un métal supplémentaire, le procédé comprenant :
a. la mise en contact du mélange avec une solution oxydante pour former une vapeur d'OsO₄ volatile, ladite solution oxydante comprenant une solution aqueuse d'un agent oxydant choisi parmi NaClO, LiClO, KClO, NalO₄, Na₂S₄O₈, XeO₃, NaClO₂, NaClO₃, NaClO₄, NaOH en contact avec du Cl₂ gazeux, d'autres sels alcalins de ClO⁻, ClO₂⁻, ClO₃⁻ et ClO₄⁻, ou des combinaisons de ceux-ci, et le mélange étant mis en contact avec la solution oxydante à une température allant de 20°C à 95°C, ledit mélange étant une cible de métal d'Os-190 irradiée, la quantité d'osmium comprenant une certaine quantité d'Os-191, et ledit au moins un métal supplémentaire étant choisi parmi Ir-192, Ir-193, Ir-194, Pt-192, Pt-194, et des combinaisons de ceux-ci, et ladite cible métallique d'Os-190 étant irradiée par un flux de neutrons thermiques ;
b. le barbotage de la vapeur d'OsO₄ à travers une solution de piégeage de KOH pour former une certaine quantité de K₂[OsO₄(OH)₂] dissous dans la solution de piégeage de KOH ;
c. la mise en contact du K₂[OsO₄(OH)₂] dissous avec un agent réducteur pour former un précipité d'Os ; et
d. la séparation du précipité d'Os de la solution de piégeage de KOH.

2. Procédé selon la revendication 1, ladite solution oxydante étant une solution aqueuse de NaClO à une concentration de chlore disponible de 12 % et ladite solution de NaClO étant mise en contact avec le mélange à une température de 40°C.

3. Procédé selon la revendication 2, ledit mélange étant mis en contact avec la solution oxydante dans un dispositif impacteur.

4. Procédé selon la revendication 1, ladite solution de piégeage de KOH comprenant une solution aqueuse de KOH à une concentration de 25 % en p/v.

5. Procédé selon la revendication 1, ledit agent réducteur étant choisi parmi l'éthanol absolu, les copeaux de Zn, les copeaux d'Al, les copeaux de Mg, NaBH₄, NaHS, H₂S gazeux, Na₂S₂O₃, la lumière UV lointaine, les ligands de phosphine, l'hydrazine, l'hydroquinone, l'acide hypophosphoreux, le formaldéhyde, l'hydroxylamine, et le citrate.

6. Procédé selon la revendication 5, dans lequel :
l'agent réducteur est l'éthanol absolu à une concentration de 5 % en v/v et le précipité d'Os est K₂[OsO₂(OH)₄] ;
l'agent réducteur est un mélange de copeaux de Zn et de copeaux d'Al, et le précipité d'Os est le métal d'Os ;
l'agent réducteur est choisi parmi les copeaux de Zn, les copeaux de Mg et les copeaux d'Al, l'agent réducteur est mis en contact avec le K₂[OsO₄(OH)₂] dissous en combinaison avec de l'HCl, et le précipité d'Os est le métal d'Os ;
l'agent réducteur est NaBH₄ et le précipité d'Os est le métal d'OS ; ou
l'agent réducteur est choisi parmi NaHS, H₂S gazeux, Na₂S₂O₃ et le précipité d'Os est OsS₂.

7. Procédé selon la revendication 1, ledit au moins un autre métal étant extrait par précipitation de la solution oxydante par la mise en contact de la solution oxydante avec un agent réducteur pour former un mélange exempt d'Os comprenant ledit au moins un métal supplémentaire.

8. Procédé selon la revendication 1, dans lequel :
la solution oxydante comprend une solution aqueuse de NaClO à une concentration de chlore disponible de 12 % ;
la solution de piégeage de KOH comprend une solution aqueuse de KOH à une concentration de 25 % en p/v ;
l'agent réducteur est une solution aqueuse de NaHS à une concentration de 10 % en p/v ;
le précipité d'OsS₂ est lavé avant l'étape d) par agitation avec de l'eau ;
le précipité d'OsS₂ est séparé de la solution de piégeage de KOH par centrifugation ;
le précipité d'OsS₂ est rincé à l'acétone ; et séché.

9. Procédé selon la revendication 2 ou 8, ledit mélange étant mis en contact avec la solution oxydante à une température de 40°C jusqu'à dissolution complète, et le mélange dissous étant mis en contact avec la solution oxydante à une température de 90°C.

10. Procédé selon la revendication 9, ledit mélange dissous étant mis en contact avec la solution oxydante jusqu'à ce que la solution oxydante soit incolore.

11. Procédé selon la revendication 4 ou 8, ladite solution de piégeage de KOH étant maintenue à une température inférieure à 5°C alors que le K₂[OsO₄(OH)₂] dissous est en cours de formation.
